**Europäisches Patentamt**

**European Patent Office**

**Office européen des brevets**

(19)

(11) Numéro de publication : **0 479 662 A1**

(12)
# DEMANDE DE BREVET EUROPEEN

(21) Numéro de dépôt : **91402608.3**

(22) Date de dépôt : **30.09.91**

(51) Int. Cl.⁵ : **H01M 10/12**, H01M 2/16

(30) Priorité : **02.10.90 FR 9012130**

(43) Date de publication de la demande :
**08.04.92 Bulletin 92/15**

(84) Etats contractants désignés :
**AT BE CH DE DK ES GB GR IT LI LU NL SE**

(71) Demandeur : **COMPAGNIE FRANCAISE D'ELECTRO-CHIMIE**
**B.P. No. 3**
**F-45480 Outarville (FR)**

(72) Inventeur : **Devillers, Bernard**
**38, rue Degeyter**
**F 45400 Fleury-Les-Aubrais (FR)**
Inventeur : **Douady, Jean-Paul**
**2, Allée de la Brette**
**F-45650 Saint Jean-Le-Blanc (FR)**
Inventeur : **Fouache, Sania**
**136, rue de la Barrière Saint Marc**
**F-45000 Orleans (FR)**

(74) Mandataire : **Phélip, Bruno et al**
**c/o Cabinet Harlé & Phélip 21, rue de La Rochefoucauld**
**F-75009 Paris (FR)**

(54) **Elément électrochimique du type ouvert et batterie de démarrage pour poids-lourds comportant des éléments électrochimiques de ce type.**

(57) L'élément d'accumulateur du type ouvert comporte, dans un bac muni d'au moins une ouverture permettant l'échappement des produits gazeux, au moins deux plaques (2, 3) respectivement positive et négative, ces plaques (2, 3) baignant dans un électrolyte acide à l'état liquide et étant séparées entre elles par au moins un élément séparateur ayant une bonne résistance physique et chimique a l'acide, ledit séparateur étant en une composition à base de fibres de verre ou de matériau analogues, courtes, non tissées et de diamètre microscopique, ce séparateur (4) étant monté comprimé sur au moins l'une desdites plaques (2, 3) avec un taux de compression de 5 à 40 % par rapport à son épaisseur initiale. La batterie du type ouvert pour poids-lourds selon l'invention comporte plusieurs éléments électrochimiques de ce type.

EP 0 479 662 A1

La présente invention est relative à un élément électrochimique du type ouvert, ainsi qu'à l'utilisation de cet élément électrochimique pour réaliser des batteries de démarrage pour poids-lourds .

On sait que dans les éléments d'accumulateurs conventionnels, et notamment les éléments d'accumulateurs au plomb, il se crée en cours de fonctionnement des dégagements de gaz, par exemple d'hydrogène et d'oxygène . Les éléments d'accumulateurs ouverts se définissent comme étant les éléments d'accumulateurs qui permettent l'échappement de ces produits gazeux, par exemple par l'intermédiaire d'ouvertures ménagées sur les couvercles qui leurs sont associés. Les éléments électrochimiques du type ouvert s'opposent donc aux éléments électrochimiques du type étanche à recombinaison dans lesquels les gaz qui se forment au cours des différentes réactions électrochimiques sont maintenus sous une pression interne et se recombinent en leur intérieur.

De façon générale, les éléments électrochimiques, et notamment les batteries, sont constitués de plaques positives et négatives disposées de façon qu'une plaque positive alterne avec une plaque négative, deux plaques successives étant associées à un séparateur placé entre lesdites plaques et ayant pour fonction d'isoler les plaques entre elles et de renforcer mécaniquement lesdites plaques.

La présente invention propose quant à elle des éléments électrochimiques du type ouvert utilisant des séparateurs d'une structure et d'un montage nouveaux dans le cadre de ces éléments électrochimiques, qui améliorent, de façon inattendue pour l'homme du métier, à la fois la résistance mécanique des batteries qui en sont munies et les performances en cyclage de ces batteries.Pour ce faire, l'invention propose principalement d'utiliser des séparateurs en un matériau qui est constitué de microfibres de verre, ou éventuellement également de microfibres de nature différente,mais de propriétés analogues, ce séparateur enveloppant les plaques de l'élément électrochimique et étant monté comprimé contre lesdites plaques avec un taux de compression par rapport à son épaisseur initiale compris entre 5 et 40% Les plaques et les séparateurs de cet élément électrochimique baignent dans un bain d'électrolyte acide.

Il a déjà été proposé,notamment par le brevet FR-2 101193 au nom de la Société GATES RUBBER COMPANY,d'utiliser pour des éléments électrochimiques, des séparateurs en microfibres de verre disposés en contact intime avec les plaques dudit élément électrochimique. Cependant, il s'agit là d'éléments électrochimiques du type étanche dans lesquels les séparateurs ont pour fonction d'absorber totalement l'électro- lyte liquide et permettent, par leur contact intime avec les plaques, des transferts homogènes de gaz entre lesdites plaques afin d'autoriser les réactions de recombinaison.

Dans l'élément électrochimique proposé par l'invention, aucune recombinaison de gaz n'est possible, puisque les gaz ne sont pas sous pression et s'échappent directement par les ouvertures dudit élément. En outre, le bain d'électrolyte dans lequel baignent les plaques et les éléments séparateurs ne permet pas, comme le séparateur des éléments électrochimiques étanches du brevet FR-2.101.193, le transfert des bulles de gaz d'une plaque à l'autre. Or, et de façon surprenante,il est apparu à la demanderesse, qu'il pouvait également être obtenu des améliorations sensibles au niveau des performances des batteries ouvertes,notamment en cyclage en utilisant pour des éléments électrochimiques du type ouvert, des séparateurs à microfibres de verre ou de matériaux analogues.

La présente invention a donc pour objet un élément électrochimique du type ouvert comportant dans un bac muni d'au moins une ouverture permettant l'échappement des produits gazeux, au moins deux plaques respectivement positive et négative, ces plaques baignant dans un électrolyte acide à l'état liquide et étant séparées entre elles par au moins un élément séparateur ayant une bonne résistance physique et chimique à l'acide , caractérisé en ce que ledit séparateur est en une composition à base de fibres de verre ou de matériaux analogues, non tissées et de diamètre microscopique, ce séparateur étant monté comprimé sur au moins l'une desdites plaques avec un taux de compression de 5 à 40% par rapport à son épaisseur initiale.

De façon préférentielle, un séparateur est monté comprimé sur une desdites plaques avec un taux de compression de 10 à 30% par rapport à son épaisseur initiale et avantageusement avec un taux de compression de 15 à 20% par rapport à son épaisseur initiale.

De préférence encore, la porosité totale du matériau d'un séparateur est de 95%, le diamètre de ses pores étant compris entre 2 et 100 micromètres; la surface spécifique d'un séparateur est comprise entre 0,5 et 2 m²/g; chaque plaque positive ou chaque plaque négative est enveloppée dans un séparateur monté comprimé sur ladite plaque; le fond du bac, sur lequel les plaques sont destinées à être en appui,est sensiblement lisse;les séparateurs et les plaques sont bloqués par l'intermédiaire d'une résine, la masse surfacique d'un séparateur est comprise entre 30 et 500g/m²; la perte de poids du séparateur dans l'acide est inférieure à 3%; la résistance à la traction d'un séparateur est comprise entre 0,2 et 3 kilonewton par mètre dans le sens de la hauteur et 0,2 et 2,5 kilonewton par mètre dans le sens de la largeur.

L'invention a encore pour objet une batterie de type ouvert pour poids-lourds, caractérisée en ce qu'elle comporte plusieurs éléments électrochimiques du type précédemment décrit; les différents éléments électrochimiques de ladite batterie sont répartis dans différents compartiments délimités à l'intérieur du même bac.

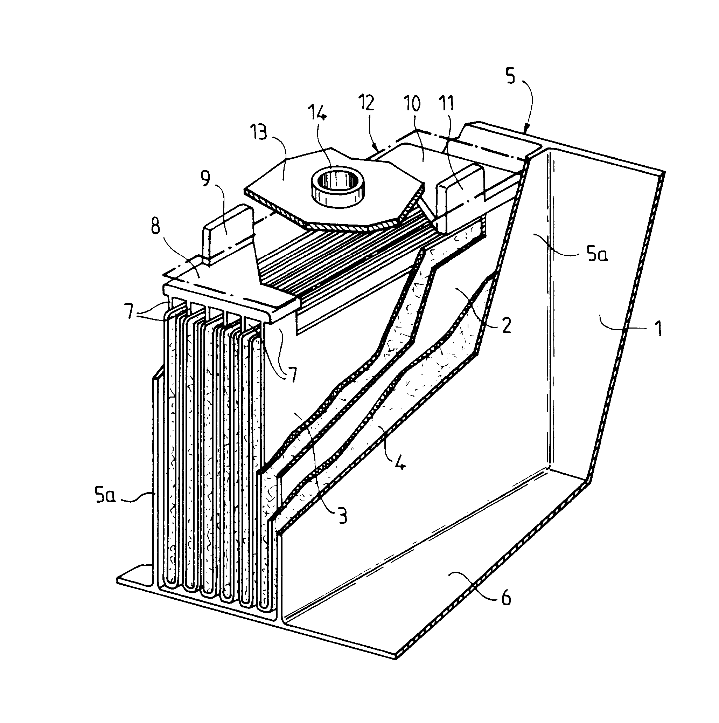

La description qui suit est purement illustrative et non limitative . Elle doit être lue en regard du dessin unique annexé sur lequel on a représenté schématiquement un élément électrochimique, notamment pour batterie de poids-lourd,conforme à l'invention.

L'élément électrochimique représenté sur cette figure comporte essentiellement,disposées dans un bac 1,une succession de plaques plates positives 2 associées à des plaques plates négatives 3 disposées de façon alternée par rapport auxdites plaques positives 2. Chaque plaque positive 2 est enveloppée, notamment au niveau de son bord disposé sur le fond du bac, par un séparateur 4 en microfibres de verre, ce qui permet d'éviter les risques de court-circuit pouvant intervenir au bas desdites plaques 2. Les plaques positives et négatives 2 et 3 sont sensiblement rectangulaires de même format et s'étendent dans la largeur d'un compartiment 5 du bac 1 , ledit bac 1 étant compartimenté par des parois 5a de façon à recevoir plusieurs éléments électrochimiques .Les plaques 2 et 3 ont même largeur et hauteur.Les plaques 2 et 3 peuvent être de façon classique constituées de grilles de n'importe quel type d'alliage à base de plomb recouvertes de pates en matériau actif.

Les plaques négatives 3 sont toutes munies,au niveau d'un de leurs coins opposés au fond 6 du bac 1 ,d'une languette 7 en saillie par rapport à leurs bords opposés audit fond 6. Ces différentes languettes 7 sont toutes reliées entre elles par l'intermédiaire d'une broche 8, qui est une plaque conductrice parallèle au fond du bac 1 et associée à une tête de soudure inter-éléments 9,qui est une tête plate en forme également de languette en saillie par rapport à la broche 8 du côté de celle-ci qui est opposé aux plaques 2 et 3,cette tête 9 s'étendant dans un plan parallèle auxdites plaques 2 et 3 et étant décalée à l'intérieur du compartiment 5 par rapport aux languettes 7.La broche 8 a un contour principal rectangulaire dont la largeur correspond à la largeur de contact des languettes 7, ledit contour rectangulaire étant associé à une partie triangulaire en saillie au niveau d'une de ses largeurs latérales et portant ladite tête 9. De la même façon, les plaques positives 2 sont chacune munies au niveau de leur coin opposé au coin des languettes 7 et au fond du bac 1, de languettes (non représentées) relées entre elles par une broche 10 associée à une tête de soudure inter-élément 11 disposée dans le compartiment 5 du côté opposé à la tête 9.

L'emsemble du compartiment 5 est rempli d'un liquide électrolyte (acide sulfurique) dans lequel baignent totalement les plaques 2 et 3 et dont le niveau, qui a été représenté en traits mixtes référencés par 12 sur la figure, arrive, dans le bac 1, juste au-dessus des broches 10, au niveau de la base des têtes de soudure 9 et 11. On notera encore que les plaques 2 et 3, ainsi que les séparateurs 4 sont montés dans le compartiment 5 directement en contact avec le fond 6 du bac 1, qui est un fond lisse, les plaques 2 et 3 étant des plaques sans pied à bord inférieur lisse, ce qui évite les risques de perforation du séparateur 4. Les plaques 2 et 3 ainsi que les séparateurs 4 sont également maintenus dans le compartiment 5 par l'intermédiaire d'un dépôt de matière synthétique (HOT MELT, résine, etc....) réalisé au-dessus des séparateurs 4, ce qui permet à la batterie d'avoir une meilleure tenue aux essais de vibrations, ce dépôt maintenant les uns par rapport aux autres d'une part, les plaques positives 2 et les séparateurs 4, et d'autre part, les diférentes plaques 2 et 3 entre elles contre les parois 5a et 5b de chaque compartiment 5.

Il a encore été représenté sur la figure le couvercle 13 du bac 1, au niveau d'un logement de bouchon 14. Ce couvercle 13 et le bac 1 sont en polypropylène. La masse de l'ensemble de la batterie est conforme à celle des batteries de camion à usage sévère.

Les séparateurs 4 sont quant à eux constitués d'une composition de fibres de verre pouvant comporter également des fibres de natures différentes, ces fibres pouvant être éventuellement maintenues entre elles par l'intermédiaire d'un liant. Ces fibres de verre ont la particularité d'être de diamètre microscopique et d'être courtes et non tissées. Un tel séparateur 4 est chimiquement inerte et a une très bonne stabilité physique et chimique dans l'électrolyte, ainsi qu'une grande capacité de rétention de l'électrolyte par unité de volume. Ces séparateurs 4 sont montés comprimés sur les plaques positives 2 qu'ils enveloppent totalement,le taux de compression d'un séparateur 4 monté dans la batterie étant tel que son épaisseur dans ladite batterie est comprimée de 5 à 40% par rapport à son épaisseur initiale mesurée sous 10 kilo-Pascals. De meilleurs résultats sont obtenus avec un taux de compresson d'environ 10 à 30% de l'épaisseur initiale et même plus particulièrement d'environ 15 à 20%. Un séparateur 4 en place dans la batterie presse la matière active contre la plaque 2 à laquelle il est associé, ce qui renforce la tenue mécanique de cette matière, améliorant ainsi les performances dela batterie en cyclage et en tenue aux essais de vibrations.

La dimension des fibres est uniforme et leur diamètre est compris entre 0,2 et 10 micromètres. La porosité totale du matériau d'un séparateur 4 est de 95%, le diamètre des pores variant de 2 à 100 micromètres. Sa surface spécifique est comprise entre 0,5 et 2 m²/g. Sa masse rapportée à sa surface varie de30 à 500 g/m². La parte de poids du séparateur dans l'acide est inférieure à 3%. Sa résistance à la traction, qui dépend de la nature des fibres et de l'épaisseur du séparateur 4, est préférentiellement comprise entre 0,2 et 3 kiloNewton/mètre, dans le sens de la hauteur, et entre 0,2et 2,5 kiloNewton/mètre dans le sens de la largeur.

Les signes de référence insérés dans les revendications qui suivent ont pour but de faciliter la compréhension de ces dernières, mais n'en limitent aucunement la portée.

## Revendications

1. Elément électrochimique du type ouvert comportant dans un bac muni d'au moins une ouverture permettant l'échappement des produits gazeux, au moins deux plaques (2, 3) respectivement positive et négative, ces plaques (2, 3) baignant dans un électrolyte acide à l'état liquide et étant séparées entre elles par au moins un élément séparateur (4) ayant une bonne résistance physique et chimique à l'acide, caractérisé en ce que ledit séparateur (4) est en une composition à base de fibres de verre ou de matériaux analogues, notamment de synthèse, non tissées et de diamètre microscopique, ce séparateur (4) étant monté comprimé sur au moins l'une desdites plaques (2, 3) avec un taux de compression de 5 à 40% par rapport à son épaisseur initiale.

2. Elément électrochimique selon la revendication 1, caractérisé en ce que un séparateur (4) est monté comprimé sur une desdites plaques (13) avec un taux de compression de 10 à 30% par rapport à son épaisseur initiale.

3. Elément électrochimique selon la revendication 2, caractérisé en ce qu'un séparateur (4) est monté comprimé sur au moins l'une desdites plaques (2, 3) avec un taux de compression de 15 à 20% par rapport à son épaisseur initiale.

4. Elément électrochimique selon l'une quelconque des revendications précédentes, caractérisé en ce que la porosité totale du matériau d'un séparateur (4) est de 95%, le diamètre de ses pores étant compris entre 2 et 100 micromètres.

5. Elément électrochimique selon l'une quelconque des revendications précédentes, caractérisé en ce que la surface spécifique d'un séparateur (4) est comprise entre 0,5 et 2 $m^2$ /g.

6. Elément électrochimique selon l'une quelconque des revendications précédentes, caractérisé en ce que chaque plaque positive (12) ou chaque plaque négative est enveloppée dans un séparateur (4) monté comprimé sur ladite plaque (2).

7. Elément électrochimique selon l'une quelconque des revendications précédentes, caractérisé en ce que le fond (6) du bac (1), sur lequel les plaques (2, 3) sont destinées à être en appui, est sensiblement lisse.

8. Elément électrochimique selon l'une quelconque des revendications précédentes, caractérisé en ce que les plaques (2, 3) et les séparateurs (4) sont bloqués par l'intermédaire d'une résine.

9. Elément électrochimique selon l'une quelconque des revendications précédentes, caractérisé en ce que la masse surfacique d'un séparateur (4) est comprise entre 30 et 500 g/m².

10. Elément électrochimique selon l'une quelconque des revendications précédentes, caractérisé en ce que la perte de poids du séparateur (4) dans l'acide est inférieure à 3%

11. Elément électrochimique selon l'une quelconque des revendications précédentes, caractérisé en ce que la résistance à la traction d'un séparateur (4) est comprise entre 0,2 et 3 kiloNewton par mètre dans le sens de la hauteur et de 0,2 et 2,5 kiloNewton par mètre dans le sens de la largeur.

12. Batterie du type pouvert pour poids-lourds, caractérisée en ce qu'elle comporte plusieurs éléments électrochimiques selon l'une quelconque des revendications précédentes

13. Batterie selon la revendication 12, caractérisée en ce que les différents éléments électrochimiques de ladite batterie sont répartis dans différents compartiments (5) délimités à l'intérieur du même bac (1).

**Office européen des brevets**

# RAPPORT DE RECHERCHE EUROPEENNE

Numero de la demande

EP    91 40 2608

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 019 093 (COMPAGNIE EUROPEENE D'ACCUMULATEURS)<br>* revendications 1,5 *<br>* page 3, ligne 7 *<br>* page 4, ligne 7 - page 5, ligne 5 *<br>--- | 1,4 | H01M10/12<br>H01M2/16 |
| X | US-A-4 336 314 (K. YONEZU ET AL)<br>* colonne 2, ligne 9 - ligne 29 *<br>--- | 1 | |
| A | US-A-4 743 270 (C. P. McCARTNEY, Jr. ET AL)<br>* le document en entier *<br>--- | | |
| A | PATENT ABSTRACTS OF JAPAN<br>vol. 12, no. 7 (E-571)(2854) 9 Janvier 1988<br>& JP-A-62 165 855 ( MATSUSHITA ) 22 Juillet 1987<br>* abrégé *<br><br>----- | 1,6 | |

**DOMAINES TECHNIQUES RECHERCHES (Int. Cl.5)**

H01M

Le présent rapport a été établi pour toutes les revendications

| Lieu de la recherche | Date d'achèvement de la recherche | Examinateur |
|---|---|---|
| LA HAYE | 09 JANVIER 1992 | ANDREWS M.P. |

EPO FORM 1503 03.82 (P0402)